# EUROPEAN PATENT APPLICATION

(11) **EP 4 389 935 A1**
(43) Date of publication of application: **26.06.2024**
(21) Application number: 22215791.9
(22) Date of filing: 22.12.2022
(51) Int. Cl.: C25B 1/04, C25B 9/67, C25B 9/73, C25B 9/77, C25B 15/08, F28D 9/00, F28F 3/10, H01M 8/0267, H01M 8/0273

(54) **SEALING ARRANGEMENT**

(71) Applicant: Alfa Laval Corporate AB, 221 00 Lund (SE)
(72) Inventor: SANDGREN, Martin, SE-246 50 LÖDDEKÖPINGE (SE); HEDBERG, Magnus, SE-245 62 HJÄRUP (SE)
(74) Representative: Alfa Laval Attorneys

(57) **Abstract**

A sealing arrangement (S1, S2) for sealing between two corrugated heat transfer plates (5, 90, 92) is provided. It comprises an annular outer field gasket part (86) enclosing an outer field gasket area (AO), and a plurality of annular ring gasket parts (49) arranged outside the outer field gasket area (AO). A first, a third and a fifth ring gasket part (49a, 49c, 49e) of said plurality of ring gasket parts (49) are arranged on one side of a transverse center axis (TA) of the outer field gasket area (AO). A second and a fourth ring gasket part (49b, 49d) of said plurality of ring gasket parts (49) are arranged on the other side of the transverse center axis (TA). The third and fifth ring gasket parts (49c, 49e) are arranged on opposite sides of a longitudinal center axis (LA) of said outer field gasket area (AO). The sealing arrangement (S1, S2) further comprises a separation means (6) extending within, and closing, the outer field gasket area (AO). The separation means (6) includes a membrane (45).

## Description

### Technical Field

The invention relates to a sealing arrangement configured to seal between two corrugated heat transfer plates. The heat transfer plates and the sealing arrangement may be comprised in a device used for a heat generating process, such as electrolysis.

### Background Art

Electrolysis is a well known process of using electricity to chemically decompose an electrolyte. For example, electrolysis can be used to split water contained in an electrolyte into hydrogen and oxygen. During electrolysis, heat may be generated, which heat may have to be diverted for maintained electrolysis efficiency.

EP 4012070 discloses a heat exchanger comprising a stack of heat transfer plates. The heat exchanger is adapted for connection to an electrolyzing device such that fluids circulating in the electrolyzing device are made to pass the heat exchanger for regulation of their temperatures. Typically, the temperature of the fluids gradually increases inside the electrolyzing device. Thus, the heat exchanger receives fluids of relatively high temperature from the electrolyzing device and delivers fluids of relatively low temperature to the electrolyzing device, which means that there will be a temperature difference across the electrolyzing device. This may result in an uneven and non-optimal electrolysis process inside the electrolyzing device. The heat exchanger in EP 4012070 is a so called plate-and-shell heat exchanger. Several other types of heat exchangers exist, for example so-called plate heat exchangers. A plate heat exchanger typically comprises a number of corrugated heat transfer plates arranged aligned in a stack or pack. Sealings between the heat transfer plates define parallel flow channels between the heat transfer plates, one flow channel between each pair of adjacent heat transfer plates. Two fluids of initially different temperatures can be fed alternately through every second flow channel for transferring heat from one fluid to the other.

### Summary

An object of the present invention is to provide a sealing arrangement for sealing between two corrugated heat transfer plates so as to enable realization of a reliable and mechanically uncomplicated device comprising said heat transfer plates as part of a stack of corrugated heat transfer plates forming alternately arranged first and second plate interspaces, which device may be used for a heat generating process, such as electrolysis, and which device may allow a more uniform and effective cooling of a fluid, such as an electrolyte, and the products formed therefrom, so as to enable a maintained high process efficiency. The basic concept of the invention is to offer a sealing arrangement that may enable a reliable sealing in the second interspaces such that a heat generating process can be effectively maintained in the second interspaces, by effective cooling in the first interspaces, which sealing arrangement allows use of the first interspaces to feed fluids into, and out of, the second interspaces. Thus, the basic concept of the invention is to offer a sealing arrangement that enables a device for performing a heat generating process, such as electrolysis, which device, at the same time, may function as a traditional heat exchanger so as to provide cooling "integrated" in the heat generating process.

The sealing arrangement may be used in a device for production of hydrogen.

Since the sealing arrangement according to the invention is not arranged for use on its own, but as a component of a device as described above, the advantages of different features and embodiments of the sealing arrangement appears first when the sealing arrangement is installed in the device.

A sealing arrangement according to the invention is for sealing between two corrugated heat transfer plates which may be of the same or different types. It comprises an annular outer field gasket part enclosing an outer field gasket area, and a plurality of annular ring gasket parts arranged outside the outer field gasket area. Each of said plurality of ring gasket parts encloses a respective one of a plurality of ring gasket areas, which is smaller than the outer field gasket area. The outer field gasket area extends in a central extension plane of the outer field gasket part. A first, a third and a fifth ring gasket part of said plurality of ring gasket parts are arranged on one side of a transverse center axis of said outer field gasket area. A second and a fourth ring gasket part of said plurality of ring gasket parts are arranged on the other side of said transverse center axis. The third and fifth ring gasket parts are arranged on opposite sides of a longitudinal center axis of said outer field gasket area. The sealing arrangement further comprises a separation means extending within, and closing, the outer field gasket area. The separation means includes a membrane.

Thus, the separation means extends, at least within, the outer field gasket area. The separation means could extend also beyond and outside the outer field gasket area, should there be any particular reason for this.

The ring gasket parts may or may not be differently designed, and the ring gasket areas may or may not be of the same size and/or shape.

The membrane may be permeable to hydroxide ions to enable a heat generating process, such as electrolysis, to be performed in a device comprising the sealing arrangement.

In a device comprising the sealing arrangement, the outer field gasket part will typically be squeezed between the two heat transfer plate with a high pressure to ensure the tightness of a device comprising the heat transfer plates and the sealing arrangement. The outer field gasket part should be configured to withstand such a high pressure.

It should be stressed that "annular" not necessarily is circular but may be any "closed" shape, such as oval, polygonal or any combination thereof. Similarly, "ring" does not necessarily mean circular but may mean any "closed" shape, such as oval, polygonal or any combination thereof. Accordingly, the outer field gasket area and the ring gasket areas may have any shape. Further, the ring gasket areas may or may not be similar.

Further, it should be stressed that herein, when it is said that, for example, detail A extends "along" detail B, detail A may extend immediately at, or at a distance from, detail B, parallel or not to detail B.

The sealing arrangement according to the invention comprises at least five ring gasket parts configured to separately be positioned at, at least, five portholes of each of the two heat transfer plates. Thus, the inventive sealing arrangement enables a device comprising at least five ports which may be necessary for performing a heat generating process, such as electrolysis, with integrated cooling. Further, the separation means of the sealing arrangement according to the invention closes the outer field gasket area, which enables a device with second interspaces partly split in two by the separation means which may be necessary for performing a heat generating process, such as electrolysis, in the second interspaces. Further, the outer field gasket part is configured to enclose first and second transfer holes of each of the two heat transfer plates. This enables use of the first and second transfer holes of the two heat transfer plates to convey fluid to the outer field gasket area on both sides of the separation means. All this will be further discussed below.

The sealing arrangement may be such that a sixth ring gasket part of said plurality of ring gasket parts is arranged on the same side of the transverse center axis as the second and fourth ring gasket parts. The fourth and sixth ring gasket parts may be arranged on opposite sides of the longitudinal center axis of the outer field gasket area. Such a sealing arrangement enables a device comprising at least six ports which may be beneficial for performing a heat generating process, such as electrolysis, with "integrated" cooling.

The sealing arrangement may be such that a seventh ring gasket part of said plurality of ring gasket parts is arranged on the same side of the transverse center axis as the first, third and fifth ring gasket parts. Further, an eighth ring gasket part of said plurality of ring gasket parts may be arranged on the same side of the transverse center axis as the first, third and fifth ring gasket parts. The first and seventh ring gasket parts may be arranged on opposite sides of the longitudinal center axis of the outer field gasket area. Further, the second and eighth ring gasket parts may be arranged on opposite sides of the longitudinal center axis of the outer field gasket area. Such a sealing arrangement enables a device comprising at least eight ports which may be beneficial for performing a heat generating process, such as electrolysis, with "integrated" cooling.

The separation means of the sealing arrangement may further comprise an inner field gasket part enclosed by the outer field gasket part and an insulating inner sheet extending between the inner and outer field gasket parts. The inner field gasket part may engage with the membrane. The insulating sheet may connect, and close a space between, the inner and outer field gasket parts. As said above, in a device comprising the sealing arrangement, the outer field gasket part is typically subjected to a high pressure. Typically, the membrane may be fragile and easily damaged by high pressures. In a device comprising a sealing arrangement comprising an inner field gasket part engaging with the membrane, the engagement between the outer field gasket part and the membrane may be decreased or even completely eliminated. Typically, in the device, the inner field gasket part is squeezed between the two heat transfer plate with a certain pressure to seal one side of the membrane from the other side of the membrane. This certain pressure is relatively low, which means that a membrane engaging, at least partly, with the inner field gasket part is subjected to less stress than a membrane engaging solely with the outer field gasket part.

The inner field gasket part may be configured in different ways. As an example, the inner field gasket part may comprise two separated parallel portions extending along the longitudinal center axis of the outer field gasket area on opposite sides of the membrane. Alternatively, the inner field gasket part may be annular and enclose an inner field gasket area, and the membrane may extend within and close the inner field gasket area. Such a design may eliminate the engagement between the membrane and the outer field gasket part and thus minimize the stress on the membrane. In such an embodiment of the sealing arrangement, also the inner sheet may have an annular extension.

Since the outer and inner field gasket parts, in a device comprising the sealing arrangement, typically will be subjected to different pressures and other conditions and have different functions, they may have different configurations. As an example, the outer field gasket part and the inner field gasket part may be made of different materials. For example, the outer field gasket part may be made of a polymer, such as rubber, while the inner field gasket part may be made of a polymer, such as a thermoplastic. Alternatively, the inner and outer field gasket parts may be made of two different polymers.

In the sealing arrangement, the membrane may engage with the outer field gasket part. As an example, the membrane and the outer field gasket part may engage non-permanently with each other by just being overlapping and squeezed between the two heat transfer plates. Alternatively, the membrane could be moulded into the outer field gasket part.

However, as said above, since the membrane typically is fragile, it may instead or also engage with the inner field gasket part. As an example, the membrane and the inner field gasket part may engage non-permanently with each other by just being overlapping and squeezed between the two heat transfer plates. Alternatively, the membrane may be moulded into the inner field gasket part.

As will be further discussed below, in a device for performing electrolysis, it may be necessary to insulate the heat transfer plates forming the second interspaces from each other. To achieve this, one or both of the two heat transfer plates, between which the sealing arrangement is configured to be positioned, could be coated with an insulating material. Alternatively, the sealing arrangement may further comprise an insulating outer sheet extending outside and connecting the outer field gasket part and said plurality of ring gasket parts.

The sealing arrangement may be so configured that the third ring gasket part comprises an annular porthole gasket portion which projects more, from the central extension plane of the outer field gasket part in a first direction, than the outer field gasket part. The first direction is perpendicular to the central extension plane. Such a design may allow the porthole gasket portion to project through a porthole of one of the two heat transfer plates between which the sealing arrangement is configured to be positioned and form a part of an insulated port for conveying a fluid, as will be further discussed below.

The third ring gasket part may further comprise an annular intermediate portion, which encloses the porthole gasket portion, and an annular outer portion, which encloses the intermediate portion. The porthole gasket portion may project more from the central extension plane of the outer field gasket part in the first direction than the intermediate and outer portions. The intermediate and outer portions may contribute to the insulation between the two heat transfer plates, which insulation, as said above, may be necessary in connection with a device to be used for electrolysis.

The outer portion may project more from the central extension plane of the outer field gasket part in the first direction than the intermediate portion. Thereby, the outer portion may serve as a support for gasket arrangements arranged on an outside of the two heat transfer plates between which the sealing arrangement is configured to be positioned.

The third ring gasket part may further comprise a number of fluid flow grooves. The fluid flow grooves may extend through the porthole gasket portion in a direction from the ring gasket area to an outside of the porthole gasket portion.

The fluid flow grooves may extend "radially" in a direction from the ring gasket area to the intermediate portion and the number of fluid flow grooves may be one or more. The fluid flow grooves may be seen as a reduced thickness of the porthole gasket portion of the third ring gasket part. As indicated by the name, the fluid flow grooves are arranged to enable a fluid flow through the porthole gasket portion of the third ring gasket part, from the ring gasket area to the intermediate portion of the third ring gasket part.

The first ring gasket part may comprise an annular inner portion, an annular intermediate portion, which encloses the inner portion, and an annular outer portion, which encloses the intermediate portion. The intermediate and outer portions may project more from the central extension plane of the outer field gasket part than the inner portion. The inner portion may contribute to the insulation between the two heat transfer plates, which insulation, as said above, may be necessary in connection with a device to be used for electrolysis. The intermediate portion may seal against the two heat transfer plates between which the sealing arrangement is configured to be positioned so as to form a part of a port for conveying a fluid. The outer portion may serve as a support for gasket arrangements arranged on an outside, i.e. an opposite side, of the two heat transfer plates.

The first ring gasket part may comprise at least one leakage groove which may extend through the outer portion, from an inside to an outside of the outer portion.

The leakage groove may be seen as a reduced thickness of the outer portion of the first ring gasket part. As indicated by the name, the leakage groove is arranged to enable a fluid flow through the outer portion of the first ring gasket part, from an outside of the intermediate portion to an outside of the first ring gasket part. The fluid may be one of the fluids conveyed through the device to reveal a leakage of the device. Alternatively/additionally, the fluid may be gas, such as air, to reduce or eliminate a difference between a pressure within the intermediate portion and a pressure on an outside of the first ring gasket part.

A sealing arrangement according to the invention may have different configurations. As an example, the outer field gasket part may comprise separated first and second long side portions which extend along the longitudinal center axis of the outer field gasket area. Further, the outer field gasket part may comprise separated first and second short side portions which each connects the first and second long side portions. A distance between the first and second short side portions, which distance is measured parallel to the longitudinal center axis, may vary along a transverse center axis of the heat transfer plate. As an example, depending on the design of the rest of a device comprising the sealing arrangement, the short side portions of the outer field gasket part may be bulging outwards/away from, or inwards/towards, each other, as seen from a center of the outer field gasket area. Such a sealing arrangement may be adapted for cooperation with a plate having means for improved distribution and collection of a fluid flowing between the two heat transfer plates between which the sealing arrangement is configured to be positioned.

The outer field gasket part, and thus the outer field gasket area, may be symmetrical with respect to the transverse center axis of the outer field gasket area. Alternatively or additionally, the outer field gasket part, and thus the outer field gasket area, may be symmetrical with respect to the longitudinal center axis of the outer field gasket area. Further, the complete sealing arrangement may be symmetrical with respect to the transverse center axis of the outer field gasket area. Alternatively or additionally, the complete sealing arrangement may be symmetrical with respect to the longitudinal center axis of the outer field gasket area. Symmetry of the sealing arrangement may enable use of less types of components in a device comprising the sealing arrangement.

Still other objectives, features, aspects and advantages of the invention will appear from the following detailed description as well as from the drawings.

### Brief Description of the Drawings

The invention will now be described in more detail with reference to the appended schematic drawings, in which
Figs. 1a and 1b are essentially similar perspective views schematically illustrating a part of a device, which comprises sealing arrangements according to the invention, in a disassembled state, and different fluid paths through the device,
Fig. 2 is a schematic plan view of a heat transfer plate of the device in Fig. 1a,
Fig. 3 is a schematic plan view of a part of the device in Fig. 1a,
Fig. 4 is a schematic plan view of a part of the device in Fig. 1a,
Fig. 5 is schematic partial cross sectional perspective view of a sealing arrangement of the device in Fig. 1a,
Fig. 6 is a schematic partial cross sectional view of the sealing arrangement in Fig. 5,
Fig. 7 is another schematic partial cross sectional perspective view of the sealing arrangement in Fig. 5,
Fig. 8 is another schematic partial cross sectional view of the sealing arrangement in Fig. 5,
Figs. 9a and 9b are essentially similar perspective views schematically illustrating a part of a device, which comprises sealing arrangements according to another embodiment of the invention, in a disassembled state, and different fluid paths through the device,
Fig. 10 is a schematic plan view of a heat transfer plate of the device in Fig. 9a, and
Fig. 11 is a schematic plan view of a sealing arrangement of the device in Fig. 9a.

### Detailed Description

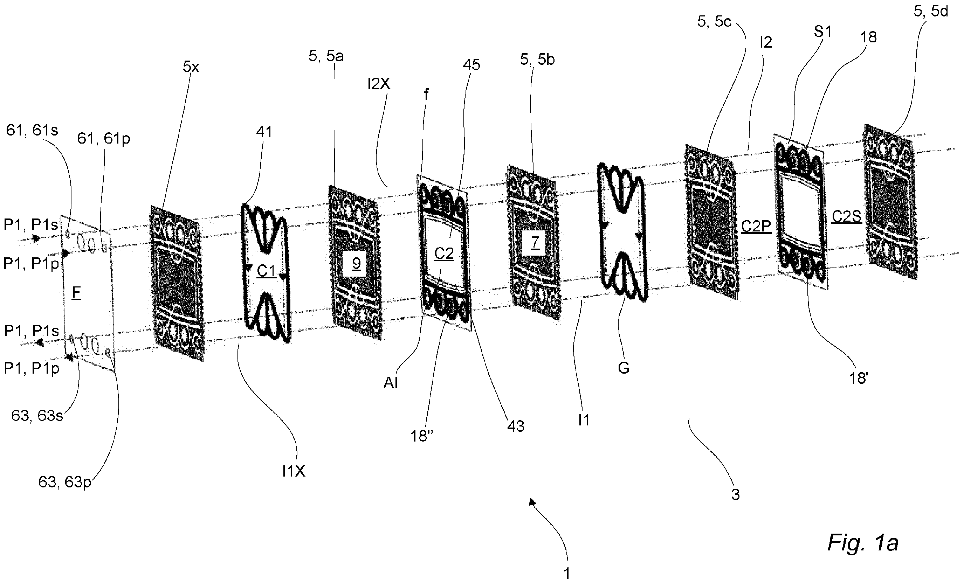

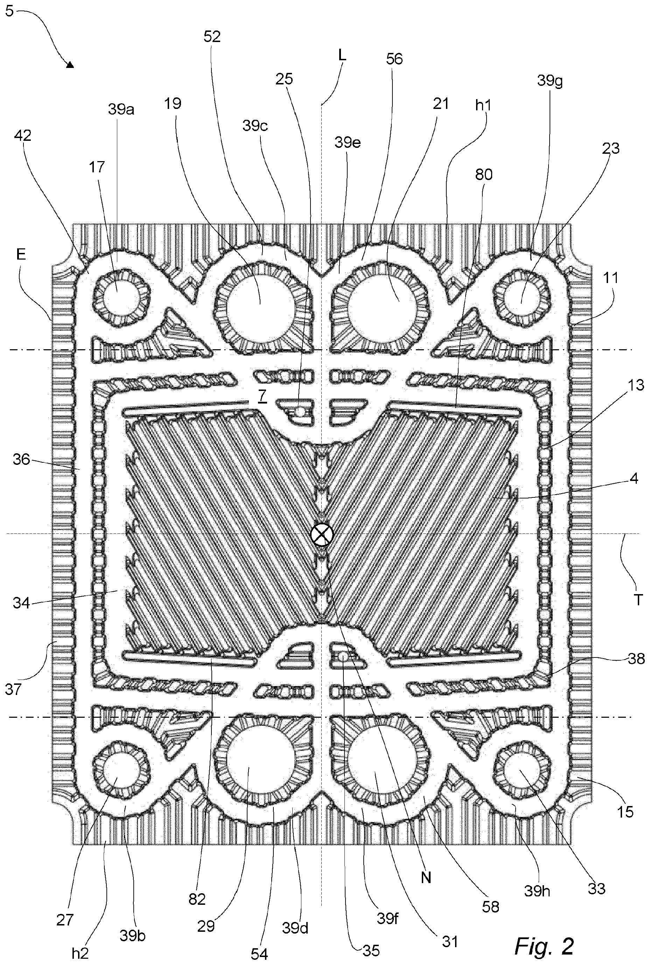

Fig. 1a illustrates a part of a device 1 used for producing hydrogen through electrolysis, here alkaline water electrolysis. The device 1 comprises a stack 3 (only partly illustrated) of essentially similar heat transfer plates 5 which each has a front side 7 and an opposing back side 9. In the stack 3, the heat transfer plates 5 are "flipped" in relation to each other, i.e. arranged front side 7 to front side 7 and back side 9 to back side 9 with every second one of the heat transfer plates 5 turned upside down with respect to the rest of the heat transfer plates 5. This means that every second one of the heat transfer plates 5 is rotated 180 degrees around a respective heat transfer plate longitudinal center axis L, and then rotated 180 degrees around a respective heat transfer plate normal axis N (Fig. 2), with respect to the rest of the heat transfer plates 5.

One of the heat transfer plates 5 is separately illustrated in Fig. 2 and described in further detail below. It has a first end portion 11, a center portion 13 and a second end portion 15 arranged in succession along the longitudinal center axis L of the heat transfer plate 5. The borders between the first end portion 11, the center portion 13 and the second end portion 15 are illustrated with ghost lines in Fig. 2. The first end portion 11 comprises a first porthole 17, a third porthole 19, a fifth porthole 21 and a seventh porthole 23, while the second end portion 15 comprises a second porthole 27, a fourth porthole 29, a sixth porthole 31 and an eighth porthole 33. The first, third, fifth and seventh portholes 17, 19, 21 and 23 are mirrorings, across a transverse center axis T of the heat transfer plate 5, of the second, fourth, sixth and eighth portholes 27, 29, 31 and 33, respectively. The first, second, third and fourth portholes 17, 27, 19 and 29 are mirrorings, across the longitudinal center axis L of the heat transfer plate 5, of the seventh, eighth, fifth and sixth portholes 23, 33, 21 and 31, respectively. Further, a first transfer hole 25 is arranged within a first half h1 of the heat transfer plate 5, and a second transfer hole 35 is arranged within a second half h2 of the heat transfer plate 5, which first and second halves h1 and h2 are arranged on opposite sides of the transverse center axis T. As is clear from Fig. 2, the first and second transfer holes 25 and 35 are arranged within the center portion 13 of the heat transfer plate 5, on opposite sides of the longitudinal center axis L.

As heat transfer plates normally are, the heat transfer plate 5 is pressed with corrugation patterns of ridges and valleys in relation to a respective central extension plane of the heat transfer plate 5, which central extension plane is parallel to the figure plane of Fig. 2. The corrugation patterns within different areas of the heat transfer plate 5 are different. For example, the center portion 13 comprises a heat transfer area 4 which is pressed with a corrugation pattern of so-called herringbone type. As another example, an edge portion 37 of the heat transfer plate 5 is pressed with alternately arranged ridges and valleys extending from an outer edge E of the heat transfer plate 5. Pressed into the heat transfer plate 5 are also first and second transverse ridges 80 and 82, respectively, which extend along the transverse center axis T of the heat transfer plate 5, on opposite sides of the heat transfer area 4. The first and second transverse ridges 80 and 82 are outwards bulging as seen from the center of the heat transfer plate 5.

The heat transfer plate 5 further comprises an annular inner front field gasket groove 34, which is outwards bulging at two opposing short sides, an outer front field gasket groove 36, which is outwards bulging at two opposing short sides, and eight annular front ring gasket grooves 39, more particularly first, second, third, fourth, fifth, sixth, seventh and eighth front ring gasket grooves 39a-39h, which all extend on the front side 7. Some sections of the outer front field gasket groove 36 also forms part of the first, second, third, fourth, fifth, sixth, seventh and eighth front ring gasket grooves 39a-39h. Further, some sections of some of the front ring gasket grooves 39a-39h also forms part of other ones of the front ring gasket grooves 39a-39h. Thus, the outer front field gasket groove 36 and first, second, third, fourth, fifth, sixth, seventh and eighth front ring gasket grooves 39a-39h are integrally formed. The inner front field gasket groove 34 encloses the heat transfer area 4, the first and second transverse ridges 80 and 82, and the first and second transfer holes 25 and 35. The outer front field gasket groove 36, in turn, encloses the inner front field gasket groove 34. The first, second, third, fourth, fifth, sixth, seventh and eighth portholes 17, 27, 19, 29, 21, 31, 23 and 33 are all arranged outside the outer front field gasket groove 36 and enclosed by a respective one of the first, second, third, fourth, fifth, sixth, seventh and eighth front ring gasket grooves 39a-39h. An intermediate corrugation pattern 38 is provided between the inner and outer front field gasket grooves 34 and 36.

Further, the heat transfer plate 5 comprises an annular back field gasket groove 42 which extends on the back side 9. In Fig. 2, a back of the back field gasket groove 42 is visible. Also, the heat transfer plate 5 comprises third, fourth, fifth and sixth back ring gasket grooves 52, 54, 56 and 58 which extend on the back side 9. In Fig. 2, a respective back of the third, fourth, fifth and sixth back ring gasket grooves 52, 54, 56 and 58, are visible. Some sections of the back field gasket groove 42 also forms part of the third, fourth, fifth and sixth back ring gasket grooves 52, 54, 56 and 58. Further, some sections of some of the back ring gasket grooves 52, 54, 56 and 58 also forms part of other ones of the back ring gasket grooves 52, 54, 56 and 58. Thus, the back field gasket groove 42 and the third, fourth, fifth and sixth back ring gasket grooves 52, 54, 56 and 58 are integrally formed. The back field gasket groove 42 encloses the heat transfer area 4 and the first, second, seventh and eighth port holes 17, 27, 23 and 33. The first and second transfer holes 25 and 35, as well as the third, fourth, fifth and sixth portholes 19, 29, 21 and 31, are all arranged outside the back field gasket groove 42. The third, fourth, fifth and sixth back ring gasket grooves 52, 54, 56 and 58 enclose a respective one of the third, fourth, fifth and sixth portholes 19, 29, 21 and 31. Additionally, the third back ring gasket groove 52 encloses the first transfer hole 25 while the sixth back ring gasket groove 58 encloses the second transfer hole 35.

With reference again to Fig. 1a, the stack 3 of heat transfer plates 5 is arranged between two frame plates F, of which only one is illustrated. The heat transfer plates 5 within the stack 3 are arranged in pairs, wherein heat transfer plates 5b and 5c form one of these pairs, while heat transfer plate 5d forms one of the heat transfer plates of another adjacent one of these pairs. The heat transfer plates of each pair form between them a first interspace 11. Further, a second interspace I2 is formed between each two adjacent pairs of heat transfer plates 5. An outer heat transfer plate 5x, which is similar to the heat transfer plates 5 except for that it lacks the first and second transfer holes 25 and 35, is arranged between the stack 3 and the frame plate F visible in Fig. 1a to form an additional first interspace 11, denoted I1X, as well as a plate pair, with the heat transfer plate 5a. An additional second interspace I2, denoted I2X, is thus formed between the heat transfer plate 5a and the heat transfer plate 5b. An outer heat transfer plate completely lacking holes may be arranged between the stack 3 and the other frame plate which is not visible in Fig. 1a. Further, gaskets, which are not illustrated, may be arranged on the inside of the frame plates F.

An annular field gasket part 41 is arranged within each of the first interspaces I1 to define a first flow channel C1 therein. An annular inner field gasket part 43 is arranged within each of the second interspaces I2 to define a second flow channel C2 therein. The inner field gasket part 43 encloses an inner field gasket area Al which is closed by a hydroxide ion permeable membrane 45 molded into the inner field gasket part 43 which is made of a thermoplastic, here polyethylene naphthalate - PEN. The membrane 45 extends within the inner field gasket part 43 and essentially parallel to the heat transfer plates 5 to split the corresponding second flow channel C2 in a second primary sub channel C2P and a second secondary sub channel C2S, which sub channels are parallel and extend on opposite sides of the membrane 45.

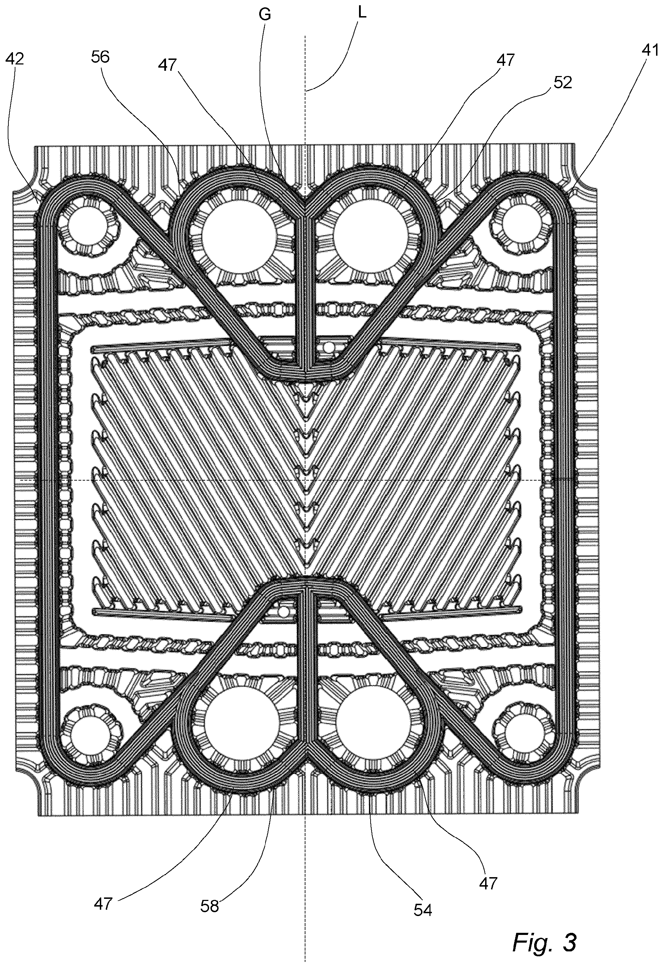

With reference to Fig. 3, the field gasket part 41 is part of a gasket arrangement G of rubber which also comprises four annular ring gasket parts 47. The field gasket part 41 is arranged in the back field gasket groove 42 of the heat transfer plate 5 while the ring gasket parts 47 are arranged in a respective one of the third, fourth, fifth and sixth back ring gasket grooves 52, 54, 56 and 58. As is clear from Fig. 3, some sections of the gasket arrangement G form part of the field gasket part 41 as well as of one of the ring gasket parts 47 while other sections of the gasket arrangement G form part of two of the ring gasket parts 47. Thereby, the field and ring gasket parts 41 and 47 are integrally formed and the gasket arrangement G is one single component.

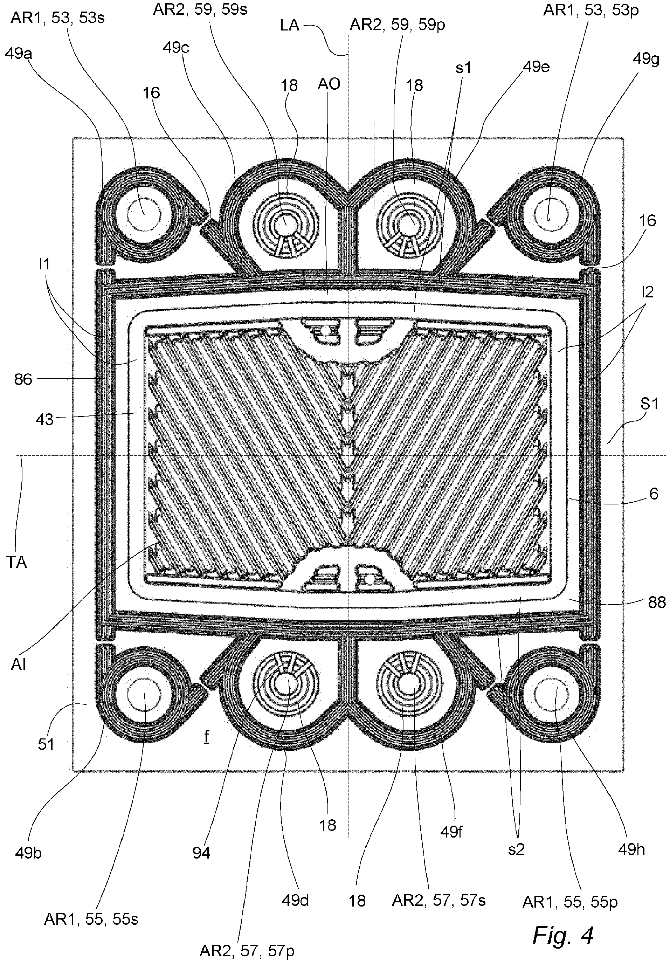

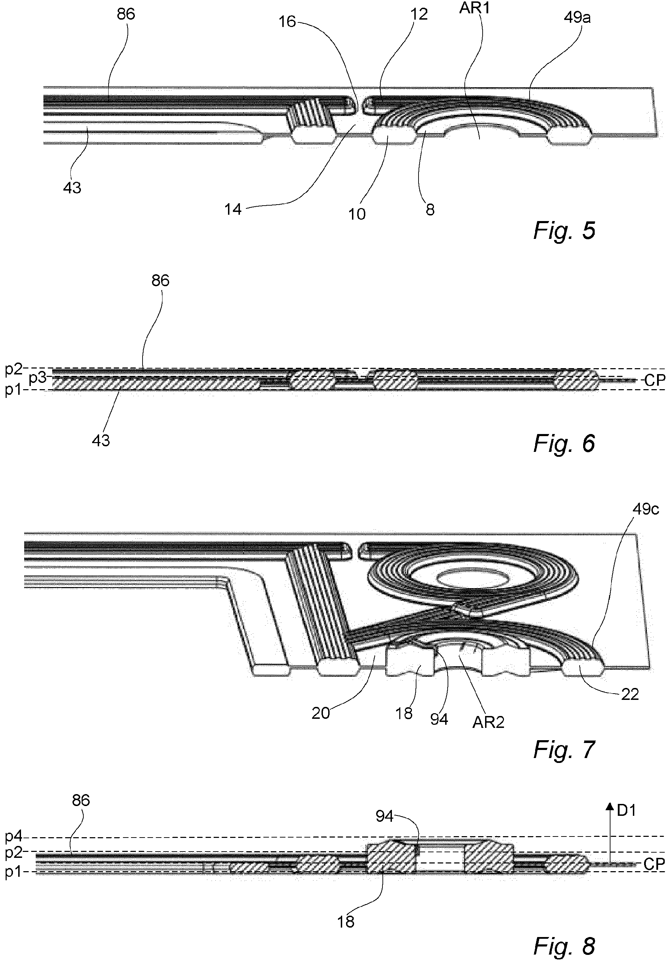

With reference to Fig. 4 to Fig. 8, the inner field gasket part 43 and the membrane 45 (not illustrated in Figs. 4-8) are parts of a separation means 6 which also comprises an annular insulating inner sheet 88 extending on the outside, and enclosing, the inner field gasket part 43. The separation means 6 is, in turn, part of a sealing arrangement S1 which also comprises an annular outer field gasket part 86, eight annular ring gasket parts 49 (49a-49h) and an insulating outer sheet 51. All parts of the sealing arrangement S1 are integrally formed. Further, all parts of the sealing arrangement S1 are made of rubber except for the membrane 45, which here is made of polyphenylene sulfide fabric which is symmetrically coated with a mixture of a polymer and zirconium oxide, and the inner field gasket part 43. The outer field gasket part 86 encloses an outer field gasket area AO, which extends in a central extension plane CP (Fig. 6) of the outer field gasket part 86. The outer field gasket part 86, just like the inner field gasket part 43, comprises opposing first and second long side portions I1 and I2 which extend on a distance from each other essentially parallel to a longitudinal center axis LA of the outer field gasket area AO. Further, the outer field gasket part 86, just like the inner field gasket part 43, comprises opposing first and second short side portions s1 and s2, which extend, on a distance from each other, along a transverse center axis TA of the outer field gasket area AO, to connect the long side portions I1 and I2. To fit the heat transfer plate 5, the first and second short side portions s1 and s2 are outwards bulging as seen from a center of the outer field gasket area AO. The outer field gasket part 86 encloses the inner field gasket part 43. The insulating inner sheet 88 is extends between, and connects, the inner and outer field gasket parts 43 and 86. Thereby, the separation means 6 closes the outer field gasket area AO enclosed by the outer field gasket part 86.

The eight ring gasket parts 49 are of two different types. Outer first, second, seventh and eighth ring gasket parts 49a, 49b, 49g and 49h are of a first type. Each of them encloses a first ring gasket area AR1 which is arranged outside, and is smaller than, the outer field gasket area AO. Intermediate third, fourth, fifth and sixth ring gasket parts 49c, 49d, 49e and 49f are of a second type. Each of them encloses a second ring gasket area AR2 which is arranged outside, and is smaller than, the outer field gasket area AO. The first, third, fifth and seventh ring gasket parts 49a, 49c, 49e and 49g are mirrorings, along the transverse center axis TA of the outer field gasket area AO, of the second, fourth, sixth and eighth ring gasket parts 49b, 49d, 49f and 49h, respectively. Further, the first, third, second and fourth ring gasket parts 49a, 49c, 49b and 49d are mirrorings, along the longitudinal center axis LA of the outer field gasket area AO, of the seventh, fifth, eighth and sixth ring gasket parts 49g, 49e, 49h and 49f, respectively. The outer field gasket part AO is symmetrical with respect to the transverse and longitudinal center axes TA and LA.

With special reference to Figs. 4, 5 and 6, the outer field gasket part 86 extends between parallel imaginary first and second planes p1 and p2, the central extension plane CP being arranged halfway between the first and second planes p1 and p2. Further, the inner field gasket part 43 extends between the first plane p1 and another parallel imaginary plane p3, the third plane p3 extending between the central extension plane CP and the second plane p2. The first ring gasket part 49a comprises an annular inner portion 8, an annular intermediate portion 10 enclosing the inner portion 8, an annular outer portion 12 enclosing the intermediate portion 10, and a sheet portion 14 closing the space between the intermediate and outer portions 10 and 12. The inner portion 8 is a sheet extending in the central extension plane CP of the outer field gasket part 86 and defining the first ring gasket area AR1 of the first ring gasket part 49a. The intermediate portion 10 is a gasket portion extending between the first and second planes p1 and p2, while the sheet portion 14 extends in the central extension plane CP, and the outer portion 12 is a gasket portion extending between the first and second planes p1 and p2. The outer portion 12 is discontinuous by being provided with two opposing leakage grooves 16. The leakage grooves 16 extend from outside the intermediate portion 10, through the outer portion 12, to an outside of the first ring gasket part 49a. This description is equally applicable to the second, seventh and eighth ring gasket parts 49b, 49g and 49h.

With special reference to Figs. 4, 7 and 8, the third ring gasket part 49c comprises an annular porthole gasket portion 18, an annular intermediate portion 20 enclosing the porthole gasket portion 18, and an annular outer portion 22 enclosing the intermediate portion 20. The porthole gasket portion 18, which defines the second ring gasket area AR2 of the third ring gasket part 49c, extends between the first plane p1 and another parallel imaginary fourth plane p4, the first and fourth planes p1 and p4 extending on opposite sides of the second plane p2. Thereby, the porthole gasket portion 18 projects more from the central extension plane CP of the outer field gasket part 86 in a first direction D1, which is perpendicular to the central extension plane CP, than the outer field gasket part 86. The intermediate portion 20 is a sheet extending in the central extension plane CP, while the outer portion 22 is a gasket portion extending between the first and second planes p1 and p2. A number, here three, of fluid flow grooves 94 are comprised in the third ring gasket part 49c, more particularly in the porthole gasket portion 18 thereof. The fluid flow grooves 94 extend radially from the second ring gasket area AR2 enclosed by the porthole gasket portion 18 to the intermediate portion 20 of the third ring gasket part 49c. Further, the fluid flow grooves 94 extend from a front side of the sealing arrangement S1 (illustrated in Fig. 4) towards a backside of the sealing arrangement S1. This description is equally applicable to the fourth, fifth and sixth ring gasket parts 49d, 49e and 49f.

As is clear from Fig. 4, some sections of the sealing arrangement S1 form part of the outer field gasket part 86 as well as of one of the ring gasket parts 49, while other sections of the sealing arrangement S1 form part of two adjacent ones of the ring gasket parts 49 and other sections of the sealing arrangement S1 form part of the intermediate portion 10 as well as of the outer portion 12 of one of the first, second, seventh and eighth ring gasket parts 49a, 49b, 49g and 49h. The insulating outer sheet 51, and thus the sealing arrangement S1, has an outer shape and outer dimensions essentially similar to an outer shape and outer dimensions of the heat transfer plates 5. The outer sheet 51 extends around and encloses and connects the outer field gasket part 86 and the ring gasket parts 49 such that the outer sheet 51, the outer field gasket part 86, the ring gasket parts 49 and the separation means 6 are integrally formed.

With reference to Figs. 2 and 4, when the sealing arrangement S1 engages properly with the heat transfer plate 5, the inner and outer field gasket parts 43 and 86 are received in a respective one of the inner and outer front field gasket grooves 34 and 36 of the heat transfer plate 5, while the ring gasket parts 49 are received in a respective one of the front ring gasket grooves 39. Arranged like that, the sealing arrangement S1, including the membrane 45, will completely cover the front side 7 of the heat transfer plate 5.

Thus, as illustrated in Fig. 1a, in the device 1, each of the heat transfer plates 5 engages with a gasket arrangement G on the back side 9, and with a sealing arrangement S1 on the front side 7. With reference to Figs. 2 and 3 and the gasket arrangement G, the field gasket part 41 encloses the first, second, seventh and eight portholes 17, 27, 23 and 33 of the heat transfer plate 5, while the ring gasket parts 47 enclose a respective one of the third, fourth, fifth and sixth portholes 19, 29, 21 and 31 of the heat transfer plate 5, and two of the ring gasket parts 47 also enclose a respective one of the first and second transfer holes 25 and 35 of the heat transfer plate 5. With reference to Figs. 2 and 4 and the sealing arrangement S1, the first, second, third, fourth, fifth, sixth, seventh and eighth ring gasket parts 49a, 49b, 49c, 49d, 49e, 49f, 49g and 49h are arranged at a respective one of the first, second, third, fourth, fifth, sixth, seventh and eight portholes 17, 27, 19, 29, 21, 31, 23 and 33 of the heat transfer plate 5.

With reference to Figs. 1a and 4, when several heat transfer plates 5, several gasket arrangements G and several sealing arrangements S1 engage properly with each other in the device 1, each of the porthole gasket portions 18 of the third, fourth, fifth and sixth ring gasket parts 49c, 49d, 49e and 49f will project through the aligned portholes of two adjacent ones of the heat transfer plates 5 arranged on a front side f of the outer sheet 51 of the corresponding one of the sealing arrangements S1, and abut the back side of another, adjacent porthole gasket portion 18. As an example, the porthole gasket portion 18' will project though the heat transfer plates 5c and 5b and abut the back side of the porthole gasket portion 18". Thereby, the porthole gasket portions 18 will form four rubber tunnels or ports through the device 1, more particularly a second primary inlet port 57p, a second secondary inlet port 57s, a second primary outlet port 59p and a second secondary outlet port 59s, which will be further discussed below. The fluid flow grooves 94 in the porthole gasket portions 18 of the third, fourth, fifth and sixth ring gasket parts 49c, 49d, 49e and 49f will allow fluid passage into, and out of, these rubber tunnels, i.e. the second primary inlet port 57p, the second secondary inlet port 57s, the second primary outlet port 59p and the second secondary outlet port 59s.

When the device 1 is ready for use, the heat transfer plates 5 and the interposed gasket arrangements G and sealing arrangements S1 are compressed between the frame plates F so as to form the first and second flow channels C1 and C2 and also port means for conveying first and second fluids through the device 1. Compressed like that, the heat transfer plates 5 of each of the pairs, such as the heat transfer plates 5b and 5c, abut each other in contact areas, while contact between adjacent pairs of heat transfer plates 5, such as the heat transfer plates 5c and 5d, is prevented by the presence of the sealing arrangements S1 between the plate pairs. This separation or insulation between the plate pairs is necessary for the device 1 to work properly for electrolysis, which will be further discussed below. The compression is achieved by some kind of tightening means, such as bolts and nuts, which are not illustrated or further described herein. With reference to Fig. 4, the port means comprise first inlet port means 53 and first outlet port means 55 for the first fluid and second inlet port means 57 and second outlet port means 59 for the second fluid. In turn, the first inlet port means 53 comprises a first primary inlet port 53p and a first secondary inlet port 53s, the first outlet port means 55 comprises a first primary outlet port 55p and a first secondary outlet port 55s, the second inlet port means 57 comprises the second primary inlet port 57p and the second secondary inlet port 57s, and the second outlet port means 59 comprises the second primary outlet port 59p and the second secondary outlet port 59s.

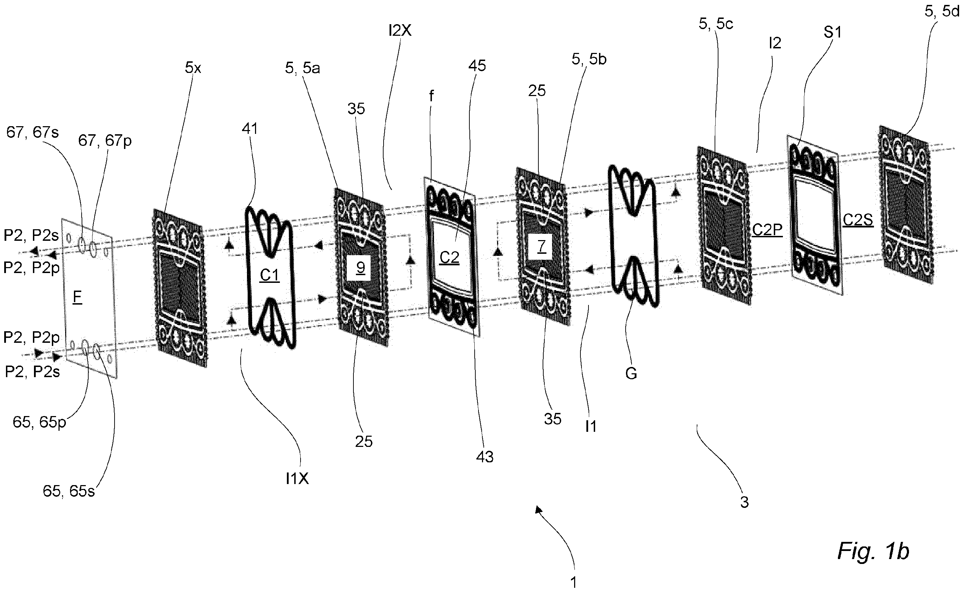

With reference to Fig. 1a, the first fluid, which is a cooling fluid, for example deionized water, is fed into the device 1 via first inlet means 61 and out of the device 1 via first outlet means 63. The first inlet means 61 comprises a first primary inlet 61p and a first secondary inlet 61s, while the first outlet means 63 comprises a first primary outlet 63p and a first secondary outlet 63s. With reference to Fig. 1b, I second fluid, which is an electrolyte, for example a mixture of water and an alkaline agent, such as potassium hydroxide, is fed into the device 1 via second inlet means 65 and out of the device 1 via second outlet means 67. The second inlet means 65 comprises a second primary inlet 65p and a second secondary inlet 65s, while the second outlet means 67 comprises a second primary outlet 67p and a second secondary outlet 67s.

A first fluid path P1 for conveying the first fluid through the device 1 comprises a first primary fluid path P1p and a first secondary fluid path P1s. With reference to Figs. 1a and 4, and the dashed lines, the first primary fluid path P1p extends from the first primary inlet 61p, into the first primary inlet port 53p, through the first flow channels C1, into the first primary outlet port 55p and to the first primary outlet 63p. The first secondary fluid path P1s extends from the first secondary inlet 61s, into the first secondary inlet port 53s, through the first flow channels C1, into the first secondary outlet port 55s and to the first secondary outlet 63s. A second fluid path P2 for conveying the second fluid through the device 1 comprises a second primary fluid path P2p and a second secondary fluid path P2s. With reference to Figs. 1b and 4, and the dashed lines, the second primary fluid path P2p extends from the second primary inlet 65p, into the second primary inlet port 57p, into the first interspaces I1 outside the first flow channels C1, through the respective first transfer hole 25 of every second one of the heat transfer plates, i.e. plates 5a, 5c,..., into the second primary sub channels C2P, through the second primary sub channels C2P, through the respective second transfer hole 35 of every second one of the heat transfer plates, i.e. plates 5a, 5c... , into the first interspaces I1 outside the first flow channels C1, into the second primary outlet port 59p and to the second primary outlet 67p. The second secondary fluid path P2s extends from the second secondary inlet 65s, into the second secondary inlet port 57s, into the first interspaces I1 outside the first flow channels C1, through the respective second transfer hole 35 of every second one of the heat transfer plates, i.e. plates 5b, 5d,..., into the second secondary sub channels C2S, through the second secondary sub channels C2S, through the respective first transfer hole 25 of every second one of the heat transfer plates, i.e. plates 5b, 5d,..., into the first interspaces I1 outside the first flow channels C1, into the second secondary outlet port 59s and to the second secondary outlet 67s.

With reference again to Fig. 4, the first fluid, i.e. the cooling fluid, is conveyed through the device 1 in the ports 53s, 53p, 55s and 55p, while the second fluid, i.e. the electrolyte, is conveyed through the device 1 in the ports 57p, 57s, 59p and 59s. The ports 53s, 53p, 55s and 55p are arranged on a larger distance from a longitudinal center plane of the device 1 than the ports 57p, 57s, 59p and 59s. This means that the cooling fluid is conveyed on the outside of the electrolyte.

Thus, a method for electrolysis is performed by means of the device 1. The method comprises the step of applying a current to the device 1 to turn every second one of the heat transfer plate of the device 1, including the heat transfer plates 5a and 5c, into anodes and the rest of the heat transfer plates of the device 1, including the heat transfer plates 5b and 5d, into cathodes. As mentioned above, sealing arrangements S1 insulating between the heat transfer plates 5 are arranged in the second interspaces I2 of the device 1, i.e. between the heat transfer plates 5a and 5b, and between the heat transfer plates 5c and 5d, etc., and split the second flow channels C2 into second primary sub channels C2P and second secondary sub channels C2S. Thereby, electrolysis may be performed within the second flow channels C2 of the device 1. As also explained above, the ports 57p, 57s, 59p and 59s for the second fluid, i.e. the electrolyte, are "lined" with rubber which minimizes the risk of short circuits between the heat transfer plates 5, 5a, which short circuits could cause malfunctioning of the device 1.

As described above, there are two fluid paths for the second fluid, i.e. the electrolyte, through the device 1. Accordingly, the method comprises the step of feeding a first part of the second fluid into the first interspaces I1 outside the first flow channels C1 and through the first transfer holes 25 of the heat transfer plates 5a, 5c, etc., into the second primary sub channels C2P, and feeding a second part of the second fluid into the first interspaces I1 outside the first flow channels C1 and through the second transfer holes 35 of the heat transfer plates 5b, 5d, etc., into the second secondary sub channels C2S. Further, the method comprises the step of feeding the first and second parts of the second fluid through the second flow channels C2, whereby water in the electrolyte is split into hydrogen and oxygen and a primary fraction is formed in the second primary sub channels C2P and a secondary fraction is formed in the second secondary sub channels C2S, the primary fraction containing more oxygen and less hydrogen than the second fraction. The primary fraction of the second fluid is fed through the second transfer holes 35 of the heat transfer plates 5a, 5c, etc. into the first interspaces I1 outside the first flow channels C1, while the secondary fraction of the second fluid is fed through the first transfer holes 25 of the heat transfer plates 5b, 5d, etc. into the first interspaces I1 outside the first flow channels C1. The primary and secondary fractions are separately discharged from the device 1 via the second primary outlet 67p and the second secondary outlet 67s, respectively. When electrolysis is performed in the second flow channels C2, heat is generated. The method comprises the step of feeding the first fluid, i.e. the deionized water, through the first flow channels C1, i.e. on both sides of the electrolysis channels C2, to effectively and uniformly divert the heat generated through the electrolysis from the device 1.

The hydrogen and the oxygen that is obtained during the electrolysis is released in gaseous form as hydrogen bubbles and oxygen bubbles which, guided by the heat transfer corrugation pattern within the heat transfer area 4 of the heat transfer plates 5, strive to rise, while second fluid in liquid form falls, so as to create a recirculation within the second flow channels C2. With reference to Fig. 4, in the second secondary subchannels C2S, the hydrogen bubbles rise within outer longitudinal parts, while the second fluid in liquid form falls within a center longitudinal part, of the heat transfer area 4 of the heat transfer plates 5b, 5d, etc. The bulging second transverse ridge 82 helps to distribute the second fluid entering from the second transfer hole 35 across the width of the heat transfer plates 5b, 5d, etc., while the bulging first transverse ridge 80 helps to collect the second fluid from across the heat transfer plates 5b, 5d, etc. and convey it towards the first transfer hole 25. In the second primary subchannels C2P, the oxygen bubbles rise within a center longitudinal part, while the second fluid in liquid form falls within outer longitudinal parts, of the heat transfer area 4 of the heat transfer plates 5a, 5c, etc. The bulging first transverse ridge 80 helps to distribute the second fluid entering from the first transfer hole 25 across the width of the heat transfer plates 5a, 5c, etc., while the bulging second transverse ridge 82 helps to collect the second fluid from across the heat transfer plates 5a, 5c, etc. and convey it towards the second transfer hole 35.

It should be stressed that the second fluid is referred to as second fluid even if its characteristics changes when it is fed through the device, and that both the primary fraction and the secondary fraction of the second fluid are referred to as second fluid even if their separate compositions vary and differ from each other and from the original second fluid. It should be stressed that all components necessary to make the device work properly, such as power sources, connections, wiring, control units, valves, pumps, gaskets, sensors, pipes, dosing equipment, etc., are not described herein or illustrated in the figures. Further, characteristics of the different components of the device which are not relevant to the present invention are not described or illustrated herein.

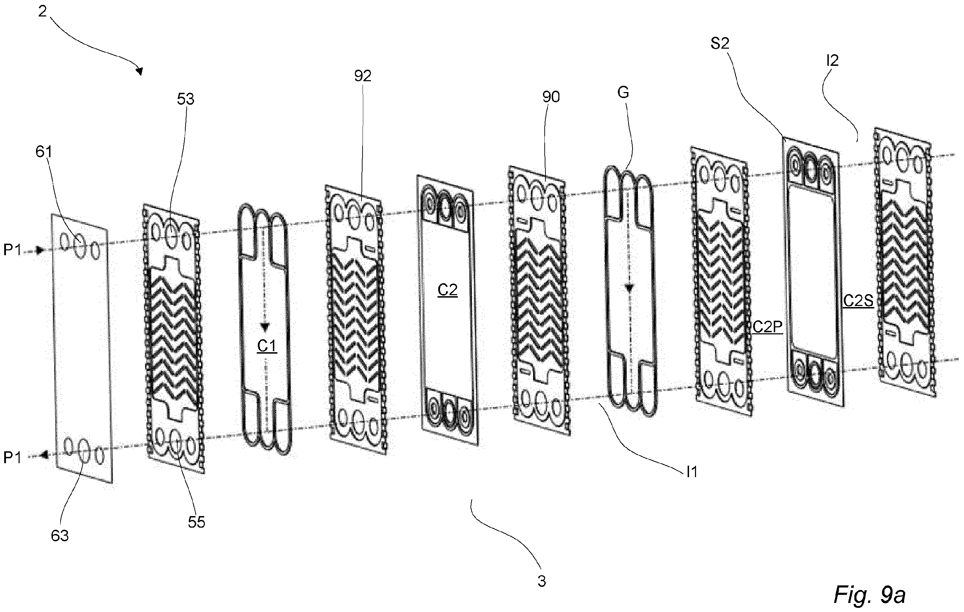

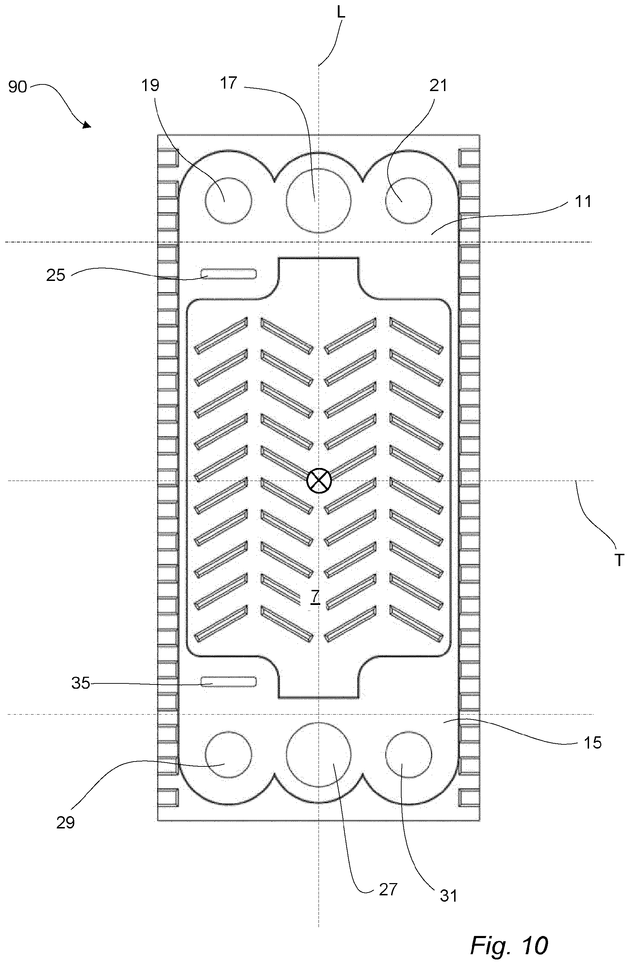

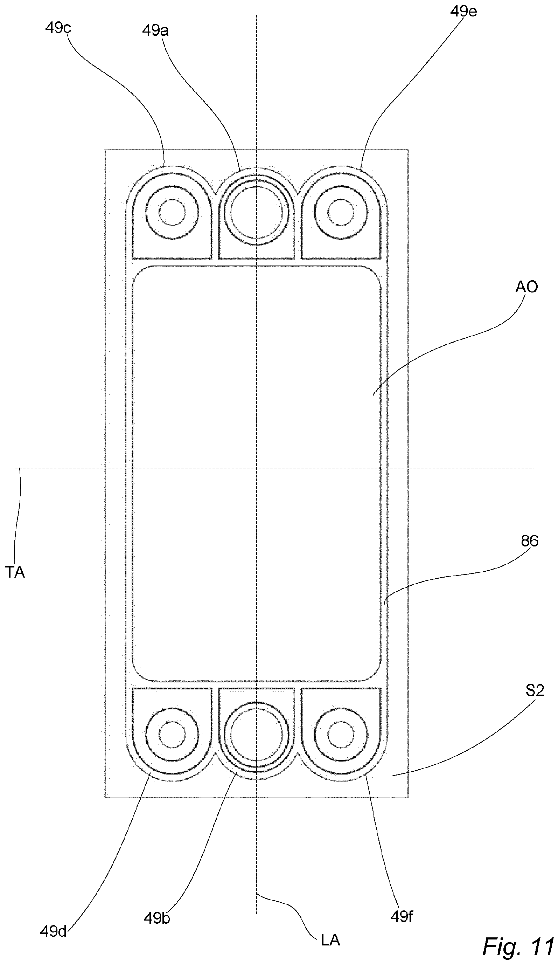

Fig. 9a schematically illustrates a part of another device 2 used for producing hydrogen through electrolysis. There are similarities between the devices 1 and 2 and the above description is, to some extent, valid also for the device 2. The device 2 comprises a stack 3 of heat transfer plates 90 of a first type and heat transfer plates 92 of a second type. One of the heat transfer plates 90 is separately illustrated in Fig. 10. The heat transfer plates 90 and 92 differ from the heat transfer plates 5 of the device 1 which means that also other components of the device 2 differ from the corresponding components of the device 1. For example, the device 2 comprises a plurality of sealing arrangements S2 which differ from the sealing arrangements S1. One of the sealing arrangements S2 is separately illustrated in Fig. 11. Hereinafter, the main differences of the sealing arrangement S2 as compared to the sealing arrangement S1 will be focused on.

With reference to Fig. 10, the heat transfer plate 90 comprises a first end portion 11 provided with a first porthole 17, a third porthole 19 and a fifth porthole 21, and a second end portion 15 provided with a second porthole 27, a fourth porthole 29, and a sixth porthole 31. The heat transfer plate 90 further comprises a first transfer hole 25 and a second transfer hole 35 arranged on the same side of a longitudinal center axis L of the heat transfer plate 90. A respective center of the first and second portholes 17 and 27 are arranged along the longitudinal center axis L. The first, third and fifth portholes 17, 19 and 21, and the first transfer hole 25 are mirrorings, across a transverse center axis T of the heat transfer plate 90, of the second, fourth and sixth portholes 27, 29 and 31, and the second transfer hole 35, respectively. Further, the third and fourth portholes 19 and 29 are mirrorings, across the longitudinal center axis L, of the fifth and sixth portholes 21 and 31, respectively.

The heat transfer plate 92 differs from the heat transfer plate 90, inter alia, in that the first and second transfer holes 25 and 35 are arranged on the opposite side of the longitudinal center axis L on the heat transfer plate 92 than on the heat transfer plate 90.

With reference to Fig. 11, the sealing arrangement S2 comprises an annular outer field gasket part 86, which encloses an outer field gasket area AO, and six annular ring gasket parts 49 (49a-49f) of which center first and second ring gasket parts 49a and 49b are of the above described first type and outer third, fourth, fifth and sixth ring gasket parts 49c, 49d, 49e and 49f are of the above described second type. The first, third and fifth ring gasket parts 49a, 49c and 49e are mirrorings, along a transverse center axis TA of the outer field gasket area AO, of the second, fourth and sixth ring gasket parts 49b, 49d and 49f, respectively. Further, the third and fourth ring gasket parts 49c and 49d are mirrorings, along a longitudinal center axis LA of the outer field gasket area AO, of the fifth and sixth ring gasket parts 49e and 49f, respectively.

With reference to Figs. 10 and 11, in the device 2, the first, second, third, fourth, fifth and sixth ring gasket parts 49a, 49b, 49c, 49d, 49e and 49f are arranged at a respective one of the first, second, third, fourth, fifth and sixth portholes 17, 27, 19, 29, 21 and 31 of the heat transfer plates 90 and 92.

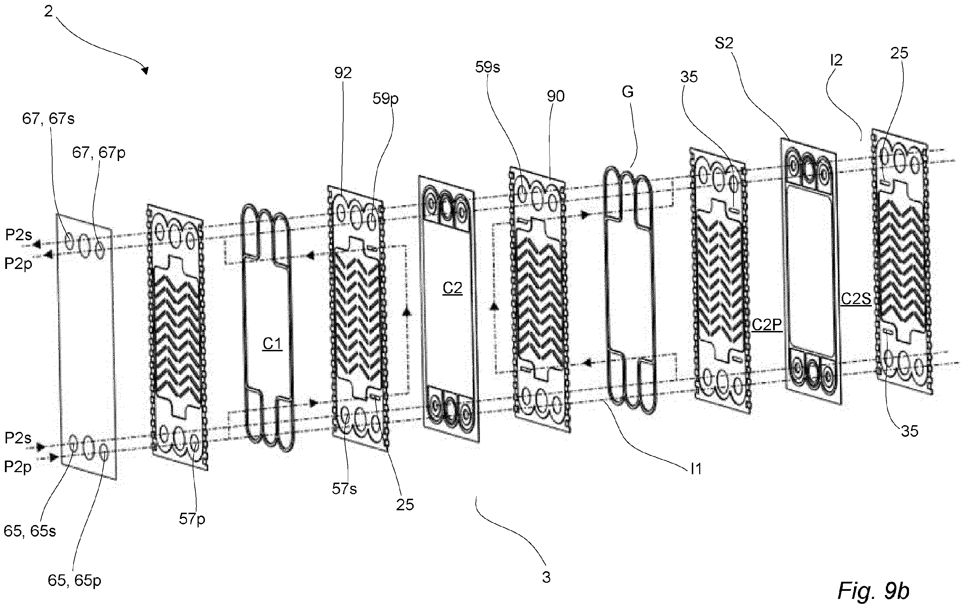

There is one single first fluid path P1 for conveying the first fluid through the device 2. With reference to Fig. 9a, and the dashed lines, the first fluid path P1 extends from the first inlet 61, into the first inlet port 53, through the first flow channels C1, into the first outlet port 55 and to the first outlet 63. A second fluid path P2 for conveying the second fluid through the device 1 comprises a second primary fluid path P2p and a second secondary fluid path P2s. With reference to Fig. 9b and the dashed lines, the second primary fluid path P2p extends from the second primary inlet 65p, into the second primary inlet port 57p, into the first interspaces I1 outside the first flow channels C1, through the respective first transfer hole 25 of every second one of the heat transfer plates, i.e. the heat transfer plates 92, into the second primary sub channels C2P, through the second primary sub channels C2P, through the respective second transfer hole 35 of every second one of the heat transfer plates, i.e. the heat transfer plates 92, into the first interspaces I1 outside the first flow channels C1, into the second primary outlet port 59p and to the second primary outlet 67p. The second secondary fluid path P2s extends from the second secondary inlet 65s, into the second secondary inlet port 57s, into the first interspaces I1 outside the first flow channels C1, through the respective second transfer hole 35 of every second one of the heat transfer plates, i.e. the heat transfer plates 90, into the second secondary sub channels C2S, through the second secondary sub channels C2S, through the respective first transfer hole 25 of every second one of the heat transfer plates, i.e. the heat transfer plates 90, into the first interspaces I1 outside the first flow channels C1, into the second secondary outlet port 59s and to the second secondary outlet 67s.

Thus, in the device 2, the first fluid is conveyed in the ports 53 and 55, while the second fluid is conveyed in the ports 57p, 57s, 59p and 59s. The ports 57p, 57s, 59p and 59s are arranged on a larger distance from a longitudinal center plane of the device 2 than the ports 53 and 55. This means that the second fluid is conveyed on the outside of the first fluid.

The above described embodiments of the present invention should only be seen as examples. A person skilled in the art realizes that the embodiments discussed can be varied in a number of ways without deviating from the inventive conception.

In the above described embodiments, the sealing arrangements comprise six or eight ring gasket parts. A sealing arrangement according to the invention could, however, comprise more or less ring gasket parts, even an odd number of ring gasket parts, for example in connection with devices having a second inlet port means that doesn't comprise second primary and secondary inlet ports, like in the above described embodiments, but one single second inlet port only communicating with the second primary and secondary outlet ports.

In the above described embodiments, the sealing arrangements comprise inner and outer field gasket parts, and the membrane engages with the inner field gasket part. In an alternative embodiment, the inner field gasket part could be omitted and the membrane could instead engage, possibly by moulding, with the outer field gasket part.

The membrane could engage with the inner or outer field gasket part by other means than moulding, such as by gluing, clamping or squeezing.

In the above described embodiments, the heat transfer plates are "flipped" in relation to each other. A sealing arrangement according to the invention could also be designed to be comprised in a stack with heat transfer plates "rotated" in relation to each other.

The membrane may be of other types than described above, especially in devices of other types than the ones described above. As an example, the membrane may be permeable to protons or anions instead of hydroxide ions, or other ions than hydroxide ions.

In the above described embodiments, contact between adjacent pairs of heat transfer plates is prevented by the presence of the sealing arrangements between the plate pairs, which sealing arrangements comprises insulating outer sheets connecting the second annular field gasket part and the second annular ring gasket parts. In alternative embodiments, the insulating outer sheets could be omitted and the heat transfer plates could instead be suitably locally coated with insulating material to prevent contact between adjacent pairs of heat transfer plates.

The sealing arrangement may be comprised in a device used for another type of electrolysis than alkaline water electrolysis, for example chlor-alkali electrolysis. Further, the sealing arrangement may be comprised in a device for other applications than electrolysis, for example a device in the form of a fuel cell. It should be stressed that the attributes first, second, third, ..., primary, secondary, and A, B, C, ... , etc. are used herein just to distinguish between species and not to express any kind of mutual order between, or attribute any special characteristics to, the species.

It should be stressed that "receiving", "feeding", "communicating" etc., throughout the text, means "receiving directly or indirectly" and "feeding directly or indirectly" and "communicating directly or indirectly", respectively.

It should be stressed that a description of details not directly relevant to the present invention has been omitted and that the figures are just schematic and not drawn according to scale. It should also be said that some of the figures have been more simplified than others. Therefore, some components may be illustrated in one figure but left out on another figure.

## Claims

1. A sealing arrangement (S1, S2) for sealing between two corrugated heat transfer plates (5, 90, 92), the sealing arrangement (S1, S2) comprising an annular outer field gasket part (86) enclosing an outer field gasket area (AO) which extends in a central extension plane (CP) of the outer field gasket part (86), and a plurality of annular ring gasket parts (49) arranged outside said outer field gasket area (AO), each of said plurality of ring gasket parts (49) enclosing a respective one of a plurality of ring gasket areas (AR1, AR2) which are smaller than the outer field gasket area (AO), a first, a third and a fifth ring gasket part (49a, 49c, 49e) of said plurality of ring gasket parts (49) being arranged on one side of a transverse center axis (TA) of said outer field gasket area (AO), a second and a fourth ring gasket part (49b, 49d) of said plurality of ring gasket parts (49) being arranged on the other side of said transverse center axis (TA), the third and fifth ring gasket parts (49c, 49e) being arranged on opposite sides of a longitudinal center axis (LA) of said outer field gasket area (AO), wherein the sealing arrangement (S1, S2) further comprises a separation means (6) extending within, and closing, said outer field gasket area (AO), said separation means (6) including a membrane (45).

2. A sealing arrangement (S1, S2) according to claim 1, wherein a sixth ring gasket part (49f) of said plurality of ring gasket parts (49) is arranged on the same side of the transverse center axis (TA) as the second and the fourth ring gasket part (49b, 49d), the fourth and sixth ring gasket parts (49d, 49f) being arranged on opposite sides of the longitudinal center axis (LA) of said outer field gasket area (AO).

3. A sealing arrangement (S1) according to any of the preceding claims, wherein a seventh ring gasket part (49g) of said plurality of ring gasket parts (49) is arranged on the same side of the transverse center axis (TA) as the first, third and fifth ring gasket parts (49a, 49c, 49f), and an eighth ring gasket part (49h) of said plurality of ring gasket parts (49) is arranged on the same side of the transverse center axis (TA) as the first, third and fifth ring gasket parts (49a, 49c, 49f), the first and seventh ring gasket parts (49a, 49g) being arranged on opposite sides of the longitudinal center axis (LA) of said outer field gasket area (AO), and the second and eighth ring gasket parts (49b, 49h) being arranged on opposite sides of the longitudinal center axis (LA) of said outer field gasket area (AO).

4. A sealing arrangement (S1, S2) according to any of the preceding claims, wherein said separation means (6) further comprises an inner field gasket part (43) enclosed by the outer field gasket part (86) and an insulating inner sheet (88) extending between the inner and outer field gasket parts (43, 86), wherein the inner field gasket part (43) engages with the membrane (45).

5. A sealing arrangement (S1, S2) according to claim 4, wherein the inner field gasket part (43) is annular and encloses an inner field gasket area (Al), and wherein the membrane (45) extends within the inner field gasket area (Al).

6. A sealing arrangement (S1, S2) according to any of claims 4 or 5, wherein the outer field gasket part (86) and the inner field gasket part (43) are made of different materials.

7. A sealing arrangement (S1, S2) according to any of claims 4-6, wherein the membrane (45) is moulded into the inner field gasket part (43).

8. A sealing arrangement (S1, S2) according to any of the preceding claims, further comprising an insulating outer sheet (51) extending outside and connecting the outer field gasket part (86) and said plurality of ring gasket parts (49).

9. A sealing arrangement (S1, S2) according to any of the preceding claims, wherein the third ring gasket part (49c) comprises an annular porthole gasket portion (18) which projects more, from the central extension plane (CP) of the outer field gasket part (86) in a first direction (D1), which is perpendicular to the central extension plane (CP), than the outer field gasket part (86).

10. A sealing arrangement (S1, S2) according to claim 9, wherein the third ring gasket part (49c) further comprises an annular intermediate portion (20), which encloses the porthole gasket portion (18), and an annular outer portion (22), which encloses the intermediate portion (20), wherein the porthole gasket portion (18) projects more from the central extension plane (CP) of the outer field gasket part (86) in said first direction (D1) than the intermediate and outer portions (20, 22).

11. A sealing arrangement (S1, S2) according to claim 10, wherein the outer portion (22) projects more from the central extension plane (CP) of the outer field gasket part (86) in said first direction (D1) than the intermediate portion (20).

12. A sealing arrangement (S1, S2) according to any of claims 9-11, wherein the third ring gasket part (49c) comprises a number of fluid flow grooves (94) extending through the porthole gasket portion (18) in a direction from the ring gasket area (AR2) to an outside of the porthole gasket portion (18).

13. A sealing arrangement (S1, S2) according to any of the preceding claims, wherein the first ring gasket part (49a) comprises an annular inner portion (8), an annular intermediate portion (10), which encloses the inner portion (8), and an annular outer portion (12), which encloses the intermediate portion (10), wherein the intermediate and outer portions (10, 12) projects more from the central extension plane (CP) of the outer field gasket part (86) than the inner portion (8).

14. A sealing arrangement (S1, S2) according to claim 13, wherein the first ring gasket part (49a) comprises at least one leakage groove (16) extending through the outer portion (12), from an inside to an outside of the outer portion (12).

15. A sealing arrangement (S1, S2) according to any of the preceding claims, wherein the outer field gasket part (86) comprises separated first and second long side portions (I1, I2) which extend along the longitudinal center axis (LA) of the outer field gasket area (86), and separated first and second short side portions (s1, s2) which each connects the first and second long side portions (I1, I2), wherein a distance between the first and second short side portions (s1, s2), which distance is measured parallel to the longitudinal center axis (LA), varies along the transverse center axis (TA) of the heat transfer plate (5, 90, 92).
